# NEUE EUROPÄISCHE PATENTSCHRIFT

(11) **EP 2 183 550 B2**
(45) Veröffentlichungstag und Bekanntmachung des Hinweises auf die Entscheidung über den Einspruch: **28.06.2017**
(45) Hinweis auf die Patenterteilung: 26.01.2011
(21) Anmeldenummer: 08801744.7
(22) Anmeldetag: 28.08.2008
(51) Int. Cl.: G01D 5/245

(54) **INDUKTIVER WEGGEBER, KODIEREINRICHTUNG UND VERFAHREN ZUM BESTIMMEN EINER POSITION EINES ERSTEN OBJEKTS RELATIV ZU EINEM ZWEITEN OBJEKT**
INDUCTIVE DISPLACEMENT SENSOR, CODING DEVICE, AND METHOD FOR DETERMINING A POSITION OF A FIRST OBJECT RELATIVE TO A SECOND OBJECT
CAPTEUR DE PARCOURS INDUCTIF, DISPOSITIF DE CODAGE, ET PROCÉDÉ DE DÉTERMINATION D'UNE POSITION D'UN PREMIER OBJET PAR RAPPORT À UN SECOND OBJET

(30) Priorität: 31.08.2007 DE 102007041219
(43) Veröffentlichungstag der Anmeldung: 12.05.2010
(73) Patentinhaber: Pepperl + Fuchs GmbH, 68307 Mannheim (DE)
(72) Erfinder: SCHAEUBLE, Caroline, 68309 Mannheim (DE); SPECKMANN, Christian, 64625 Bensheim (DE); WEISKOPF, Bernhard, 68309 Mannheim (DE)
(74) Vertreter: Schiffer, Axel Martin
(86) Internationale Anmeldenummer: PCT/EP2008/007061
(87) Internationale Veröffentlichungsnummer: WO 2009/030432

(56) Entgegenhaltungen:
- EP-A1- 1 164 358
- DE-A1- 1 930 976
- DE-A1- 3 829 279
- DE-A1- 19 758 104
- DE-C1- 19 813 803
- GB-A- 2 126 444
- US-A- 5 894 678

## Beschreibung

Die vorliegende Erfindung bezieht sich in einem ersten Aspekt auf einen induktiven Weggeber zum Bestimmen einer Position eines ersten Objekts relativ zu einem zweiten Objekt nach dem Oberbegriff des Anspruchs 5.

In weiteren Gesichtspunkten bezieht sich die Erfindung auf eine Kodiereinrichtung und auf ein Verfahren zum Bestimmen einer Position eines ersten Objekts relativ zu einem zweiten Objekt nach dem Oberbegriff des Anspruchs 17.

Derartige Weggeber und Verfahren sind bekannt und werden bei einer Vielzahl von industriellen Prozessen eingesetzt.

Ein gattungsgemäßer Weggeber zum Bestimmen einer Position eines ersten Objekts relativ zu einem zweiten Objekt weist eine an dem ersten Objekt anzubringende Kodiereinrichtung und eine an dem zweiten Objekt anzubringende Sensoreinheit mit einer Mehrzahl von induktiven Sensoren zum Abtasten der Kodiereinrichtung auf.

Bei einem gattungsgemäßen Verfahren zum Bestimmen einer Position eines ersten Objekts relativ zu einem zweiten Objekt wird eine an dem ersten Objekt angebrachte Kodiereinrichtung mit einer an dem zweiten Objekt angebrachten Sensoreinheit, die eine Mehrzahl von induktiven Sensoren aufweist, abgetastet.

Üblicherweise werden solche Weggeber als Inkrementalweggeber eingesetzt, wobei zwei periodische Schaltsignale erzeugt werden, die um 90° phasenversetzt sind.

Für zahlreiche Aufgabenstellungen ist es erwünscht, ohne vorheriges Festlegen eines Referenzpunkts die Absolutposition eines Gegenstandes zu bestimmen.

**Aufgabe** der Erfindung ist es, einen induktiven Weggeber, eine Kodiereinrichtung und ein Verfahren anzugeben, mit welchen mit einfachen Mitteln zuverlässig eine Absolutposition eines ersten Objekts relativ zu einem zweiten Objekt bestimmt werden kann.

Diese Aufgabe wird in einem ersten Gesichtspunkt der Erfindung durch den induktiven Weggeber mit den Merkmalen des Anspruchs 5 gelöst.

In weiteren Aspekten der Erfindung wird diese Aufgabe durch die Kodiereinrichtung mit den Merkmalen des Anspruchs 1 und das Verfahren mit den Merkmalen des Anspruchs 17 gelöst.

Bevorzugte Ausführungsbeispiele des erfindungsgemäßen induktiven Weggebers, der erfindungsgemäßen Kodiereinrichtung und des erfindungsgemäßen Verfahrens sind Gegenstand der abhängigen Ansprüche und werden im Folgenden im Einzelnen, insbesondere im Zusammenhang mit den Figuren beschrieben.

Der induktive Weggeber der oben genannten Art ist erfindungsgemäß dadurch gekennzeichnet, dass die Kodiereinrichtung eine Mehrzahl von Markierungsabschnitten aufweist, die jeweils durch Messabschnitte getrennt sind, wobei zumindest die Messabschnitte variable Breiten aufweisen, dass die Markierungsabschnitte und die Messabschnitte zum Unterscheiden durch die Sensoreinheit unterschiedliche physikalische Eigenschaften aufweisen, dass durch die Messabschnitte zusammen mit angrenzenden Markierungsabschnitten Identifizierungsbereiche gebildet sind, dass die Sensoreinheit in Erstreckungsrichtung der Kodiereinrichtung mindestens so lang ist und eine Anzahl der induktiven Sensoren mindestens so groß ist, dass in jeder Messsituation mindestens ein Identifizierungsbereich bestimmbar ist, und dass zum eindeutigen Zuordnen eines Identifizierungsbereichs zu einer Absolutposition der Sensoreinheit relativ zur Kodiereinrichtung jeder Identifizierungsbereich auf der Kodiereinrichtung genau einmal vorkommt.

Die erfindungsgemäße Kodiereinrichtung ist gekennzeichnet durch eine Mehrzahl von Markierungsabschnitten, die jeweils durch Messabschnitte getrennt sind, wobei zumindest die Messabschnitte variable Breiten aufweisen, wobei die Markierungsabschnitte und die Messabschnitte zum Unterscheiden durch eine Sensoreinheit unterschiedliche physikalische Eigenschaften aufweisen, wobei durch die Messabschnitte zusammen mit angrenzenden Markierungsabschnitten Identifizierungsbereiche gebildet sind, und wobei jeder Identifizierungsbereich genau einmal vorkommt.

Das Verfahren der oben genannten Art ist erfindungsgemäß dadurch weitergebildet, dass die Kodiereinrichtung eine Mehrzahl von Markierungsabschnitten aufweist, die jeweils durch Messabschnitte getrennt sind, wobei zumindest die Messabschnitte variable Breiten aufweisen, dass die Markierungsabschnitte und die Messabschnitte zum Unterscheiden durch die Sensoreinheit unterschiedliche physikalische Eigenschaften aufweisen, dass durch die Messabschnitte zusammen mit angrenzenden Markierungsabschnitten Identifizierungsbereiche gebildet sind, dass die Sensoreinheit in Erstreckungsrichtung der Kodiereinrichtung mindestens so lang ist und eine Anzahl der induktiven Sensoren mindestens so groß ist, dass in jeder Messsituation die Ortsposition von mindestens einem Identifizierungsbereich bestimmt werden kann, dass jeder Identifizierungsbereich auf der Kodiereinrichtung genau einmal vorkommt und dass anhand des Identifizierungsabschnitts die Absolutposition der Sensoreinheit relativ zur Kodiereinrichtung eindeutig bestimmt wird.

Als Kerngedanke der Erfindung kann angesehen werden, die Kodiereinrichtung so aufzubauen, dass die einzelnen Markierungsabschnitte nicht mehr streng äquidistant angeordnet sind. Vielmehr ist bei der erfindungsgemäßen Kodiereinrichtung in den Abständen zwischen den einzelnen Markierungsabschnitten eine Information über die Absolutposition enthalten. Auf diese Weise wird eine Bestimmung der Absolutposition möglich.

Als zweiter Kerngedanke kann in diesem Zusammenhang angesehen werden, die Kodiereinrichtung so auszubilden, dass jeder Identifizierungsbereich genau einmal vorkommt. Durch diese Maßnahme kann eine Absolutposition eindeutig bestimmt werden, ohne dass hierzu weitere Informationen, beispielsweise ein festgelegter Startpunkt, notwendig sind.

Bei einer Variante der Erfindung ist die Sensoreinheit so gebildet, dass in jeder Messsituation die Ortspositionen von mindestens zwei benachbarten Markierungsabschnitten bestimmt werden können.

Als Abtasten im Sinn der hier beschriebenen Erfindung ist ein im Allgemeinen berührungsloses Bestimmen der Ortspositionen, beispielsweise der Markierungsabschnitte, zu verstehen. Beispielsweise wird also eine relative Position eines bestimmten Markierungsabschnitts oder eines bestimmten Messabschnitts bezüglich der Sensoreinheit aufgrund einer bestimmten physikalischen Eigenschaft des Markierungsabschnitts und/oder des Messabschnitts bestimmt.

Als wesentlicher Vorteil der Erfindung kann angesehen werden, dass mit besonders einfachen Mitteln eine zuverlässige Bestimmung einer Absolutposition ermöglicht wird, die auch in äußerst robusten industriellen Umgebungen eingesetzt werden kann.

Bei einer besonders bevorzugten Ausgestaltung der Kodiereinrichtung kommt jede Breite der Messabschnitte auf der Kodiereinrichtung genau einmal vor.

Die Kodiereinrichtung ist in einer vorteilhaften und leicht montier- und demontierbaren Variante als Kodierschiene gebildet.

Prinzipiell kann die Kodiereinrichtung aber auch aus einer Mehrzahl von separaten Metallfahnen als Markierungs- oder Messabschnitten gebildet sein.

Schließlich ist auch eine Anordnung der Kodiereinrichtung auf einer gekrümmten Bahn möglich, so dass auch Drehbewegungen überwacht werden können.

Bei einer besonders bevorzugten Variante des erfindungsgemäßen Verfahrens wird aus den Ortspositionen von zwei benachbarten Markierungsabschnitten die Breite des zwischen diesen Markierungsabschnitten liegenden Messabschnitts bestimmt und aus der Breite des Messabschnitts wird die Absolutposition der Sensoreinheit relativ zur Kodieraneinrichtung eindeutig bestimmt.

Die Identifizierungsbereiche sind durch die Messabschnitte zusammen mit jeweils einem oder auch beiden angrenzenden Markierungsabschnitten gebildet. Bei einfachen Varianten weisen beispielsweise die Markierungsabschnitte zur Erhöhung des Kodierungsvorrats zwei verschiedene Größen oder Breiten auf.

Nicht erfindungsgemäß sind Ausgestaltungen, bei denen die Breite der Markierungsabschnitte ohnehin konstant ist. Dann werden die Identifizierungsbereiche durch die Messabschnitte gebildet.

Bei der Erfindung werden demnach, um eine Messlänge, also eine Länge, über welche eine Position absolut bestimmt werden kann, nicht auf eine Sensorlänge zu beschränken, mehrere Markierungsabschnitte, beispielsweise Bedämpfungselemente, auf einer Schiene montiert und zusätzlich deren Position zueinander bestimmt. Da eine bestimmte Relativposition nur einmal auf der Schiene vorkommt, kann auf diese Weise eine absolute Position bestimmt werden. Erfindungsungemäß ist die Kodierschiene so aufgebaut, dass sich immer mindestens zwei Markierungsabschnitte, beispielsweise Bedämpfungselemente, vor dem Sensor befinden.

Um ein sicheres Unterscheiden von zwei Markierungsabschnitten zu gewährleisten, müssen diese einen Mindestabstand voneinander aufweisen. Ebenso sind die relativen Abstandsunterschiede zwischen zwei Markierungsabschnitten, die auch als Fahnen bezeichnet werden können, mindestens so groß, dass sie sicher voneinander unterschieden werden können.

Bei einer besonders bevorzugten Ausgestaltung des erfindungsgemäßen induktiven Weggebers weisen die Markierungsabschnitte und die Messabschnitte eine unterschiedliche elektrische Leitfähigkeit auf. Beispielsweise können die Markierungsabschnitte elektrisch leitend und die Messabschnitte elektrisch isolierend sein. Eine messtechnische Unterscheidung der Markierungsabschnitte und der Messabschnitte ist dann in einfacher Weise mit Hilfe der induktiven Sensoren möglich.

Grundsätzlich kann auch für bestimmte Anwendungen zweckmäßig und bevorzugt sein, wenn die Markierungsabschnitte und die Messabschnitte eine unterschiedliche Permeabilität aufweisen.

Die vorgenannten Eigenschaften werden bei einer einfach herzustellenden Variante verwirklicht, bei der die Markierungsabschnitte Metallfahnen eines Metallblechs und die Messabschnitte Ausnehmungen in dem Metallblech sind.

Eine Auswertung der Messsignale der induktiven Sensoren der Sensoreinheit gestaltet sich besonders einfach, wenn die induktiven Sensoren in der Sensoreinheit in gleichen Abständen voneinander angeordnet sind.

Damit die Markierungsabschnitte sicher erkannt werden können, müssen diese eine Mindestbreite aufweisen. Markierungsabschnitte mit geringerer Breite können erkannt werden, wenn die induktiven Sensoren in der Sensoreinheit dichter angeordnet sind. Eine dichtere Anordnung der Sensoren in der Sensoreinheit kann bewerkstelligt werden, wenn die induktiven Sensoren in mehreren, insbesondere parallelen, Reihen, beispielsweise in zwei Reihen versetzt zueinander angeordnet sind.

Die Sicherheit der Bestimmung der Absolutposition kann erhöht werden, wenn die Sensoreinheit in Erstreckungsrichtung der Kodierschiene mindestens so lang ist und eine Anzahl der induktiven Sensoren mindestens so groß ist, dass in jeder Messsituation die Breite von mindestens zwei Messabschnitten bestimmt werden kann.

Um in dieser Situation gleichwohl die Länge der Sensoreinheit in Erstreckungsrichtung möglichst klein zu halten, ist vorteilhafterweise die Kodierschiene so gebildet, dass im Wesentlichen auf einen vergleichsweise langen Messabschnitt jeweils ein vergleichsweise kurzer Messabschnitt folgt. Quantitativ ausgedrückt, können die Messabschnitte auf der Codierschiene so verteilt sein, dass für jeden zweiten Markierungsabschnitt die Summe der Breiten der beiden benachbarten Messabschnitte um nicht mehr als 10% von einem Mittelwert abweicht. So kann die zum Ausmessen notwendige Sensorlänge minimiert werden. Würde der Abstand der Markierungsabschnitte, die auch als Targets bezeichnet werden können, von einem Markierungsabschnitt zum nächsten jeweils immer nur erhöht, hätte man zwar zu Beginn der Kodierschiene nur sehr kurze Breiten, am Ende jedoch nur hohe Breiten, für die jedoch ein entsprechend längerer Sensor erforderlich wäre.

Besonders bevorzugt ist deshalb, wenn für jeden zweiten Markierungsabschnitt die Summe der Breiten der benachbarten Messabschnitte konstant ist. Da bei dieser Variante jeder zweite Markierungsabschnitt zum jeweils übernächsten Markierungsabschnitt einen konstanten Abschnitt aufweist, können solche Kodierschienen zweckmäßig auch bei Inkrementalweggebem eingesetzt werden.

Der Aufbau der Kodierschiene lässt zahlreiche Varianten zu. So können beispielsweise der Mindestabstand der Markierungsabschnitte, die Mindestbreitenunterschiede zwischen den Messabschnitten und auch eine Maximalbreite der Messabschnitte verändert werden.

Der Kodiervorrat wird erfindungsgemäß dadurch vergrößert, dass unterschiedliche Fahnenbreiten verwendet werden, so dass eine Kodierung der Position nicht nur durch den Abstand der Fahnen, sondern auch durch eine Breite der Fahnen erfolgen kann. Demgemäß weisen die Markierungsabschnitte eine variable Breite auf.

Weiterhin können mehrere Kodierschienen in Erstreckungsrichtung aneinander angrenzend angeordnet sein. Ein Verfahrweg mit einem bereits ausgeschöpften Kodevorrat kann auf diese Weise durch Anhängen eines Schienenabschnitts mit einer oder mehreren der oben genannten Veränderungen nachträglich verändert werden. Der Lesekopf, also die Sensoreinheit, muss in diesem Fall an die neuen unterschiedlichen Raster angepasst werden.

Zusätzlich oder alternativ können, um den Kodiervorrat und damit eine maximal zu überwachende Strecke, zu erhöhen, auch eine Mehrzahl von Kodierschienen parallel zueinander angeordnet sein. Bei einer weiteren besonders bevorzugten Ausgestaltung der Erfindung sind die Sensoreinheiten modular aufgebaut. Wenn sodann eine längere Sensoreinheit notwendig ist, um eine größere Wegstrecke zu überwachen, können zum Vergrößern einer maximal nachweisbaren Breite eines Messabschnitts eine Mehrzahl von Sensoreinheiten in Erstreckungsrichtung aneinander gesetzt werden. Hierdurch ergeben sich erhebliche Vereinfachungen im Hinblick auf die individuelle Konfiguration von zu überwachenden Bewegungsstrecken.

Weitere Vorteile und Merkmale der Erfindung werden nachstehend in Bezug auf die beigefügten Figuren beschrieben. Hierin zeigen:
Fig. 1 : in schematischer Ansicht einen induktiven Weggeber, der nicht zur Erfindung gehört;
Fig. 2 : in schematischer Ansicht eine Sensoreinheit eines erfindungsgemäßen Weggebers induktiven Weggebers aus Fig.1 ;
Fig. 3 : eine schematische Ansicht einer Messsituation bei einem erfindungsgemäßen induktiven Weggeber;
Fig. 4 : eine schematische Ansicht einer Ausführungsvariante einer erfindungsgemäßen Kodierschiene;
Fig. 5 : eine schematische Ansicht einer weiteren Ausführungsvariante einer erfindungsgemäßen Kodierschiene; und
Fig. 6 : eine schematische Ansicht einer Messsituation, bei der eine gekrümmte Kodierschiene abgetastet wird.

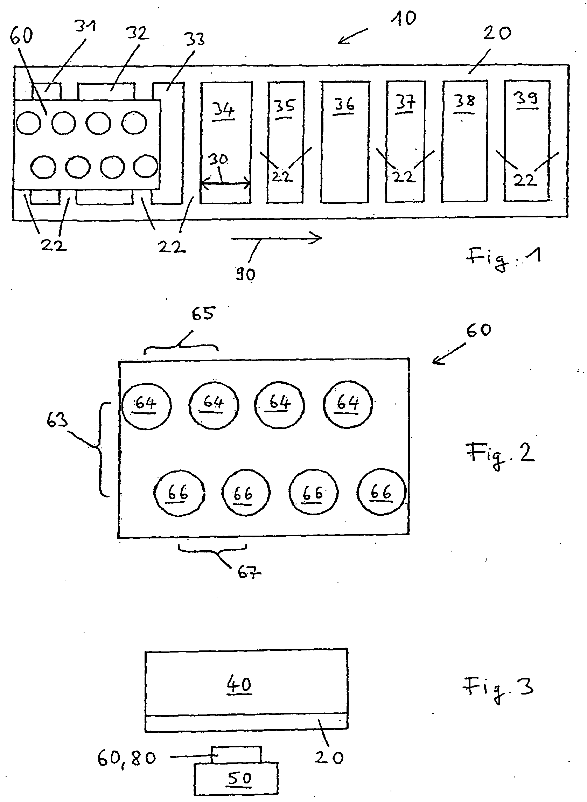

Ein Ausführungsbeispiel eines nicht erfindungsgemäßen induktiven Weggebers und einer erfindungsgemäßen Kodierschiene wird mit Bezug auf die Figuren 1 bis 3 beschrieben. Äquivalente Komponenten sind in den Figuren jeweils mit identischen Bezugszeichen versehen.

Der in Fig. 1 schematisch dargestellte induktive Weggeber 10 weist als wesentliche Komponenten eine Kodierschiene 20 und eine auch als Lesekopf bezeichnete Sensoreinheit 60 mit einer Mehrzahl von induktiven Sensoren 64, 66 auf. Details der Sensoreinheit 60 sind in Fig. 2 gezeigt. Demgemäß sind bei der Sensoreinheit 60 insgesamt acht induktive Sensoren 64, 66 in zwei zueinander parallelen Reihen angeordnet. In den Reihen sind die induktiven Sensoren 64, 66 jeweils in gleichen, durch die in Klammem 65, 67 veranschaulichten Abstände positioniert. Die Reihen selbst weisen einen durch die Klammer 63 dargestellten Abstand auf.

Wie in Fig. 3 schematisch gezeigt, wird die Kodierschiene 20 an einem ersten Objekt 40 und die Sensoreinheit 60 an einem zweiten Objekt 50 angebracht. Mit dem so gebildeten erfindungsgemäßen induktiven Wandler und dem erfindungsgemäßen Verfahren kann eine Absolutposition des zweiten Objekts 50 relativ zum ersten Objekt 40 bestimmt werden.

Die Kodierschiene 20 aus Figur 1, die nicht erfindungsgemäß ist, besteht aus einem Metallblech, in welches, jeweils unterbrochen durch Stege oder Markierungsabschnitte 22 mit einer in Erstreckungsrichtung 90 konstanten Breite, Ausnehmungen eingebracht sind, durch welche die Messabschnitte 31,..,39 gebildet sind. Beispielsweise können die Messabschnitte 31,..,39 in das Metallblech eingestanzt sein. Die Breite der Markierungsabschnitte 22 beträgt im gezeigten Beispiel 25 mm.

Im Unterschied zu den Markierungsabschnitten 22 sind die Breiten der Messabschnitte 31,..,39 in Erstreckungsrichtung 90 jeweils unterschiedlich, wobei erfindungsgemäß jede Breite genau einmal vorkommt. Hierdurch ist eine eindeutige Bestimmung der Absolutposition des ersten Objekts 40 relativ zum zweiten Objekt 50 möglich. Eine Breite eines Messabschnitts in Erstreckungsrichtung 90 ist in Fig. 1 für den Messabschnitt 34 durch den Doppelpfeil 30 veranschaulicht.

In dem in Fig. 1 gezeigten Beispiel ist die Abfolge der Breiten 30 in mm der Messabschnitte 31,..,39 wie folgt: 40, 80, 45, 75, 50, 70, 55, 65, 60. Demgemäß ist die Summe der Breiten jeweils konstant für die Paare 31, 32; 33, 34; 35, 36 und 37, 38 von Messabschnitten. Die in Fig. 1 gezeigte Kodierschiene 20 kann deshalb auch für inkrementale Messungen verwendet werden.

Die gezeigte Länge der Sensoreinheit 60 in Erstreckungsrichtung 90 der Kodierschiene 20 beträgt etwas mehr als die Summe der Breiten von zwei Messabschnitten und drei Markierungsabschnitten. Es werden also durch die Sensoreinheit 60 immer mindestens drei Markierungsabschnitte 22 überdeckt und können demgemäß im Hinblick auf ihre Ortsposition ausgewertet werden. Bevorzugt kann in dem Gehäuse, in welchem die induktiven Sensoren 64, 66 aufgenommen sind, bereits eine Steuer- und Auswerteeinheit 80 vorgesehen sein, mit welcher die induktiven Sensoren versorgt, angesteuert und im Hinblick auf ihre Messdaten ausgewertet werden.

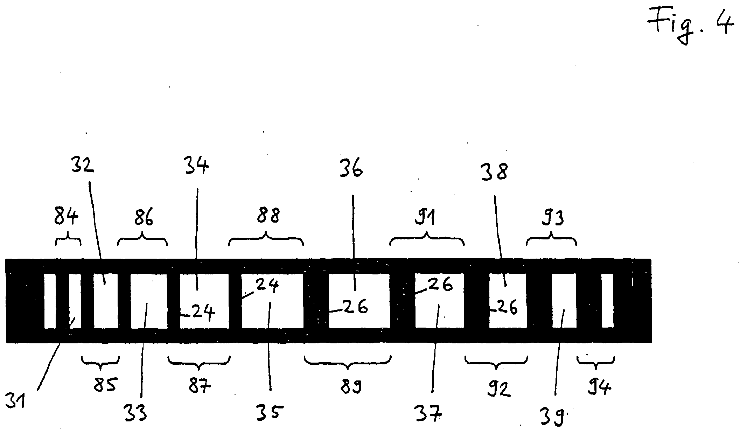

Fig. 4 zeigt eine Ausführungsvariante einer Kodierschiene 20 als Kodiereinrichtung, bei der Identifizierungsbereiche 84,..,89,..,91,..,94 gebildet sind jeweils durch Messabschnitte 31,..,39, welche als Ausnehmungen in einem Metallblech gebildet sind in Kombination mit jeweils einem benachbarten Markierungsabschnitt 24, 26. Um den Kodierungsvorrat zu erhöhen, weisen die Markierungsabschnitte 24, 26, wobei es sich um Metallfahnen handelt, unterschiedliche Breiten auf. Dadurch wird der Kodierungsvorrat im gezeigten Beispiel verdoppelt.

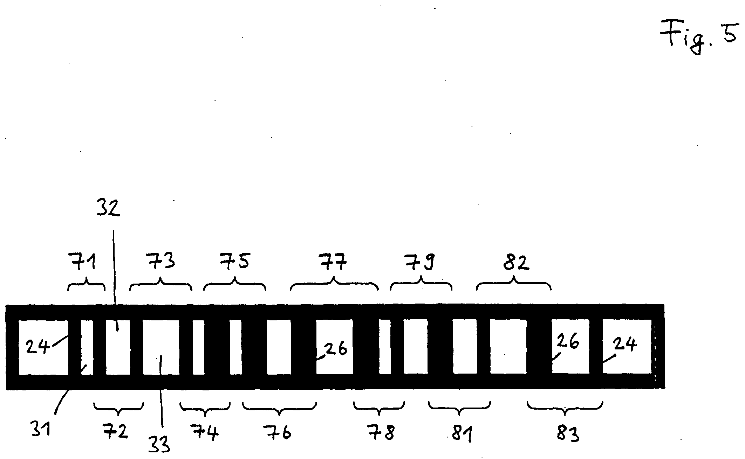

Fig. 5 zeigt eine weitere Kodierschiene 20, bei welcher Identifizierungsbereiche 71,..,79, 81,..,83 gebildet werden durch insgesamt drei verschiedene Messabschnitte 31, 32, 33, welche kombiniert werden mit einem links- und rechtsseitigen Markierungsabschnitt 24, 26, die, wie im Beispiel aus Fig. 4 zwei unterschiedliche Breiten aufweisen können. Auf diese Weise kann der Kodierungsvorrat nochmals erhöht werden und insbesondere können Messabschnitte mit derselben Breite auch mehrmals auf der Kodierschiene 20 vorkommen.

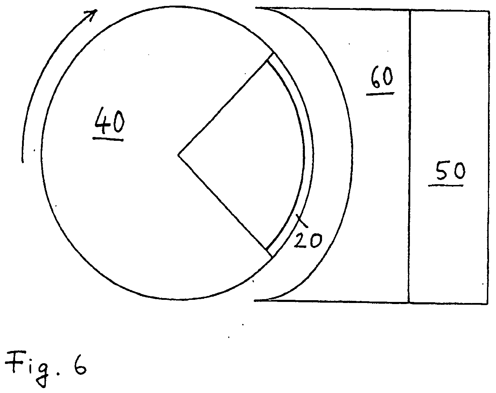

Fig. 6 zeigt schematisch die Anordnung einer Kodierschiene 20 auf einer gekrümmten Bahn an einem zylinderförmigen Objekt 40, dessen Drehbewegung mit Hilfe eines erfindungsgemäßen Weggebers, bestehend aus der Sensoreinheit 60 und der Kodierschiene 20, überwacht wird. Grundsätzlich könnte eine Abtastung einer gekrümmten Kodierschiene 20 auch mit einer innen angeordneten Sensoreinheit 60 erfolgen.

Mit der vorstehenden Erfindung wird ein neues Prinzip zur Absolutpositionserkennung beschrieben. Der erfindungsgemäße induktive Weggeber besteht aus einem Lesekopf und einer in besonderer Weise gebildeten und eine Information über die Absolutposition enthaltenden Kodier- oder Positionsschiene. Die Sensoreinheit, die auch als Lesekopf bezeichnet wird, kann dabei aus einer bestimmten Anzahl von induktiven Schwingkreisen oder Oszillatoren, die im gleichen vorgegebenen Abstand zueinander angeordnet sind, aufgebaut sein. Die Abstände der einzelnen Oszillatoren zueinander können durch den Aufbau der Kodierschiene eindeutig vorgegeben sein oder werden jedenfalls auf die konkret eingesetzte Kodierschiene abgestimmt. Die Auswertung der Ortsposition kann beispielsweise durch Auswerten des jeweils zweithöchsten Bedämpfungssignals der induktiven Sensoren, wie beispielsweise in WO 20051012840 A1, deren Offenbarungsgehalt in die vorliegende Schrift aufgenommen wird, beschrieben, erfolgen.

Die Kodier- oder Positionsschiene besteht aus Markierungsabschnitten, die auch als Bedämpfungsfahnen oder Targets bezeichnet werden, sowie aus Messabschnitten, bei denen es sich beispielsweise um Lücken oder Ausnehmungen in einem Blech handeln kann. Über unterschiedliche Abstände von zwei aufeinander folgenden Targets und die entsprechende Anordnung der verschiedenen Abstände der Markierungsabschnitte, die den Breiten der Messabschnitte auf der Kodierschiene entsprechen, kann eine absolute Position relativ zu dem Lesekopf eindeutig bestimmt werden. Die Markierungsabschnitte weisen in einer Ausgestaltung der Erfindung alle eine minimale, konstante Breite auf, die fest vorgegeben ist. Insgesamt kann diese Breite durch eine einbis mehrfache Addition der Sensorabstände im Lesekopf prinzipiell beliebig ausgedehnt werden. Ein wichtiger Vorteil ist, dass die Anordnung von zwei aufeinander folgenden positionsbestimmenden Abständen von Markierungsabschnitten so gewählt werden kann, dass bei konstanter Breite der Markierungsabstände die Abstände von einem Markierungsabschnitt zum jeweils übernächsten Markierungsabschnitt konstant gehalten werden kann.

Zur Positionsbestimmung muss der Sensor- oder Lesekopf die Position von mindestens zwei Markierungsabschnitten der segmentierten Kodierschiene auslesen, um deren Abstand zueinander zu bestimmen. Aus einer Ausmessung von Einzelelementen und einer Bestimmung von deren Position wird demgemäß eine Information über die Absolutposition eines ersten Objekts relativ zu einem zweiten Objekt erhalten. Aus dem Abstand und der Position der bedämpften Spule im Lesekopf kann dann die absolute Position des Lesekopfs relativ zur Kodierschiene bestimmt werden.

Der Kodiervorrat kann, wie vorstehend beschrieben, auf vielfältige Art vergrößert werden. Beispielsweise kann eine inverse Kodierschiene angehängt werden, bei der beispielsweise die Markierungsabschnitte, die bei der ersten Kodierschiene Metallfahnen waren, nunmehr entsprechende Lücken sind, die in ein Metallblech gestanzt werden. Auch eine mehrspurige Kodierbeschreibung kann für Anwendungen, bei denen ein größerer Kodiervorrat benötigt wird, zweckmäßig sein.

Schließlich kann der Kodeaufbau auch mit anderen als durch eine Bitzahl vorgegebenen Abständen aufgebaut werden. Wesentlich für die Erfindung ist demgemäß, dass die Breitenkodierung für die Markierungsabschnitte und die Messabschnitte unterschiedlich erfolgt.

## Patentansprüche

1. Kodiereinrichtung für einen induktiven Weggeber
mit einer Mehrzahl von Markierungsabschnitten (22), die jeweils durch Messabschnitte (31,..,39) getrennt sind, wobei die Messabschnitte (31,..,39) variable Breiten aufweisen,
wobei in den Abständen zwischen den einzelnen Markierungsabschnitten eine Information über eine Absolutposition enthalten ist,
wobei die Markierungsabschnitte (22) und die Messabschnitte (31,..,39) zum Unterscheiden durch eine Sensoreinheit (60) unterschiedliche physikalische Eigenschaften aufweisen,
wobei durch die Messabschnitte (31,..,39) zusammen mit jeweils einem oder beiden angrenzenden Markierungsabschnitten (22, 24, 26) Identifizierungsbereiche (71,..,79,81,..,89,91,..,94) gebildet sind,
wobei zum Vergrößern eines Kodiervorrats im Vergleich zu Kodiereinrichtungen mit Markierungsabschnitten konstanter Breite die Markierungsabschnitte (22) eine variable Breite aufweisen und
wobei jeder Identifizierungsbereich (71,..,79,81,..,89,91,..,94) genau einmal vorkommt.

2. Kodiereinrichtung nach Anspruch 1,
welche als Kodierschiene (20) gebildet ist.

3. Kodiereinrichtung nach Anspruch 1,
welche aus einer Mehrzahl von separaten Metallfahnen als Markierungs- oder Messabschnitten gebildet ist.

4. Kodiereinrichtung nach einem der Ansprüche 1 bis 3,
welche auf einer gekrümmten Bahn angeordnet ist.

5. Induktiver Weggeber zum Bestimmen einer Position eines ersten Objekts (40) relativ zu einem zweiten Objekt (50), insbesondere zur Durchführung des Verfahrens nach Anspruch 17,
mit einer an dem ersten Objekt (40) anzubringenden Kodiereinrichtung (20) nach einem der Ansprüche 1 bis 4, und
mit einer an dem zweiten Objekt (50) anzubringenden Sensoreinheit (60) mit einer Mehrzahl von induktiven Sensoren (64, 66) zum Abtasten der Kodiereinrichtung (20),
wobei die induktiven Sensoren (64, 66) in der Sensoreinheit (60) in gleichen Abständen voneinander angeordnet sind und die Sensoreinheit (60) in Erstreckungsrichtung (90) der Kodiereinrichtung (20) mindestens so lang ist und
wobei eine Anzahl der induktiven Sensoren (64, 66) mindestens so groß ist, dass in jeder Messsituation die Breite (30) von mindestens zwei Messabschnitten (31,..,39) bestimmbar ist.

6. Weggeber nach Anspruch 5,
**dadurch gekennzeichnet,**
**dass** die Markierungsabschnitte (22) und die Messabschnitte (31,..,39) eine unterschiedliche elektrische Leitfähigkeit aufweisen.

7. Weggeber nach Anspruch 6,
**dadurch gekennzeichnet,**
**dass** die Markierungsabschnitte (22) elektrisch leitend sind und
**dass** die Messabschnitte (31,..,39) elektrisch isolierend sind.

8. Weggeber nach einem der Ansprüche 5 bis 7,
**dadurch gekennzeichnet,**
**dass** die Markierungsabschnitte (22) und die Messabschnitte (31,..,39) eine unterschiedliche magnetische Permeabilität aufweisen.

9. Weggeber nach einem der Ansprüche 5 bis 8,
**dadurch gekennzeichnet,**
**dass** die Markierungsabschnitte (22) Metallfahnen eines Metallblechs sind und dass die Messabschnitte (31,..,39) Ausnehmungen in dem Metallblech sind.

10. Weggeber nach einem der Ansprüche 5 bis 9,
**dadurch gekennzeichnet,**
**dass** die induktiven Sensoren (64, 66) in mehreren Reihen, insbesondere in zwei Reihen, versetzt zueinander angeordnet sind.

11. Weggeber nach einem der Ansprüche 5 bis 10,
**dadurch gekennzeichnet,**
**dass** die Messabschnitte (31,..,39) so auf der Kodiereinrichtung (20) verteilt sind, dass für jeden zweiten Markierungsabschnitt (22) die Summe der Breiten der beiden benachbarten Messabschnitte (31,..,39) um nicht mehr als 10% von einem Mittelwert abweicht.

12. Weggeber nach Anspruch 11,
**dadurch gekennzeichnet,**
**dass** für jeden zweiten Markierungsabschnitt (22) die Summe der Breiten der benachbarten Messabschnitte (31,..,39) konstant ist.

13. Weggeber nach einem der Ansprüche 5 bis 12,
**dadurch gekennzeichnet,**
**dass** eine Mehrzahl von Kodiereinrichtungen (20) parallel zueinander angeordnet sind.

14. Weggeber nach einem der Ansprüche 5 bis 13,
**dadurch gekennzeichnet,**
**dass** mehrere Kodiereinrichtungen (20) in Erstreckungsrichtung (90) aneinander angrenzend angeordnet sind.

15. Weggeber nach einem der Ansprüche 5 bis 14,
**dadurch gekennzeichnet,**
**dass** zum Vergrößern einer maximal nachweisbaren Breite (30) eines Messabschnitts (31,..,39) eine Mehrzahl von Sensoreinheiten (60) in Erstreckungsrichtung (90) aneinandergesetzt sind.

16. Weggeber nach einem der Ansprüche 5 bis 15,
**dadurch gekennzeichnet,**
**dass** jede Breite der Messabschnitte auf der Kodiereinrichtung genau einmal vorkommt.

17. Verfahren zur Bestimmen einer Position eines ersten Objekts relativ zu einem zweiten Objekt,
bei dem eine an dem ersten Objekt (40) angebrachte Kodiereinrichtung (20) mit einer an dem zweiten Objekt (50) angebrachten Sensoreinheit (60), die eine Mehrzahl von induktiven Sensoren aufweist, abgetastet wird,
**dadurch gekennzeichnet,**
**dass** die Kodiereinrichtung (20) eine Mehrzahl von Markierungsabschnitten (22) aufweist, die jeweils durch Messabschnitte (31,..,39) getrennt sind, wobei die Messabschnitte (31,..,39) variable Breiten (30) aufweisen,
**dass** in den Abständen zwischen den einzelnen Markierungsabschnitten eine Information über eine Absolutposition enthalten ist,
**dass** die Markierungsabschnitte (22) und die Messabschnitte (31,..,39) zum Unterscheiden durch die Sensoreinheit (60) unterschiedliche physikalische Eigenschaften aufweisen,
**dass** durch die Messabschnitte (31,..,39) zusammen mit jeweils einem oder beiden angrenzenden Markierungsabschnitten (22, 24, 26) Identifizierungsbereiche (71,..,79,81,..,89,91,..,94) gebildet sind,
**dass** zum Vergrößern eines Kodiervorrats im Vergleich zu Kodiereinrichtungen mit Markierungsabschnitten konstanter Breite die Markierungsabschnitte (22) eine variable Breite aufweisen,
**dass** die Sensoreinheit (60) in Erstreckungsrichtung der Kodiereinrichtung (20) mindestens so lang ist und eine Anzahl der induktiven Sensoren (64, 66) mindestens so groß ist, dass in jeder Messsituation die Ortsposition von mindestens einem Identifizierungsbereich (71,..,79,81,..,89,91,..,94) bestimmt werden kann,
**dass** jeder Identifizierungsbereich (71,..,79,81,..,89,91,..,94) auf der Kodiereinrichtung (20) genau einmal vorkommt, und
**dass** anhand des Identifizierungsabschnitts (71,..,79,81,..,89,91,..,94) die Absolutposition der Sensoreinheit (60) relativ zur Kodiereinrichtung (20) eindeutig bestimmt wird.

## Claims

1. Coding device for an inductive displacement transducer
comprising a plurality of marking sections (22) each separated by measurement areas (31, ..., 39), of which the measurement areas (31, ..., 39) have variable widths,
wherein information concerning an absolute position is contained in the intervals between the individual marking sections,
wherein the marking sections (22) and the measurement areas (31, ..., 39) have different physical properties to assist differentiation thereof by a sensor unit (60),
wherein identification areas (71, ..., 79, 81,..., 89, 91, ..., 94) are formed by the measurement areas (31, ..., 39) together with in each case one or both adjacent marking sections (22, 24, 26),
wherein for the purpose of enlarging a code set, the marking sections (22) have variable widths in comparison to coding devices having marking sections with constant widths,
wherein each identification area (71, ..., 79, 81, ..., 89, 91, ..., 94) is present exactly once.

2. Coding device according to claim 1,
which is in the form of a code bar (20).

3. Coding device according to claim 1,
which is in the form of a plurality of separate metal flags acting as marking sections or measurement areas.

4. Coding device according to one of claims 1 to 3,
which is disposed on a curved orbit.

5. Inductive displacement transducer for detecting a position of a first object (40) in relation to a second object (50), particularly for execution of the method according to claim 17,
comprising a coding device (20) according to one of claims 1 to 4 for attachment to the first object (40) and
comprising a sensor unit (60) for attachment to the second object (50), which sensor unit has a plurality of inductive sensors (64, 66) for the purpose of scanning the coding device (20),
wherein the inductive sensors (64, 66) in the sensor unit (60) are equally spaced from one another and the sensor unit (60) is at least long enough in the direction of extension (90) of the coding device (20) and
wherein a number of the inductive sensors (64, 66) is at least large enough to ensure that in any measuring situation the width (30) of at least two measurement areas (31, ..., 39) can be detected.

6. Displacement transducer according to claim 5,
**characterized in that**
the marking sections (22) and the measurement areas (31, ..., 39) have different electrical conductivities.

7. Displacement transducer according to claim 6,
**characterized in that**
the marking sections (22) are electrically conductive and
that the measurement areas (31, ..., 39) are electrically non-conductive.

8. Displacement transducer according to one of claims 5 to 7,
**characterized in that**
the marking sections (22) and the measurement areas (31, ..., 39) have different magnetic permeabilities.

9. Displacement transducer according to one of claims 5 to 8,
**characterized in that**
the marking sections (22) are metal flags of a metal sheeting and
that the measurement areas (31, ..., 39) are clearances in the metal sheeting.

10. Displacement transducer according to one of claims 5 to 9,
**characterized in that**
the inductive sensors (64, 66) are disposed in a plurality of rows, particularly in two rows offset from one another.

11. Displacement transducer according to one of claims 5 to 10,
**characterized in that**
the measurement areas (31, ..., 39) are distributed on the coding device (20) such that for every second marking section (22) the sum of the widths of its both adjacent measurement areas (31, ..., 39) does not deviate from an average by more than 10%.

12. Displacement transducer according to claim 11,
**characterized in that**
for every second marking section (22) the sum of the widths of its adjacent measurement areas (31, ..., 39) is constant.

13. Displacement transducer according to one of claims 5 to 12,
**characterized in that**
a plurality of coding devices (20) are disposed parallel to one another.

14. Displacement transducer according to one of claims 5 to 13,
**characterized in that**
a plurality of coding devices (20) are lined up in the direction of extension (90).

15. Displacement transducer according to one of claims 5 to 14,
**characterized in that**
for the purpose of enlarging a maximum detectable width (30) of a measurement area (31, ..., 39), a plurality of sensor units (60) are lined up in the direction of extension (90).

16. Displacement transducer according to one of claims 5 to 16,
**characterized in that**
each width of the measurement areas is present exactly once on the coding device.

17. Method for detecting the position of a first object in relation to a second object, in which a coding device (20) attached to the first object (40) is scanned by a sensor unit (60) attached to the second object (50) which sensor unit has a plurality of inductive sensors,
**characterized in that**
the coding device (20) has a plurality of marking sections (22) each of which is separated by measurement areas (31, ..., 39), wherein the measurement areas (31, ..., 39) have variable widths (30),
that an information concerning an absolute position is contained in the intervals between the individual marking sections,
that the marking sections (22) and the measurement areas (31, ..., 39) have different physical properties to assist differentiation thereof by the sensor unit (60), that identification areas (71, ..., 79, 81, ..., 89, 91, ..., 94) are formed by the measurement areas (31, ..., 39) together with in each case one or both adjacent marking sections (22, 24, 26),
that for the purpose of enlarging a code set, the marking sections (22) have variable widths in comparison to coding devices having marking sections with constant widths,
that the sensor unit (60) is at least long enough in the direction of extension of the coding device (20) and a number of the inductive sensors (64, 66) is at least large enough that in any measuring situation the location of at least one identification area (71, ..., 79, 81, ..., 89, 91, ..., 94) can be detected,
that each identification area (71, ..., 79, 81, ..., 89, 91, ..., 94) is present exactly once on the coding device (20), and
that the absolute position of the sensor unit (60) in relation to the coding device (20) is uniquely derived by means of the identification area (71, ..., 79, 81, ..., 89, 91, ...,94).

## Revendications

1. Dispositif de codage pour un capteur de déplacement inductif
avec une pluralité de sections de marquage (22) qui sont séparées à chaque fois par des sections de mesure (31, ... , 39), les sections de mesure (31, ..., 39) présentant des largeurs variables,
dans lequel une information sur une position absolue est contenue dans les intervalles entre les différentes sections de marquage,
dans lequel les sections de marquage (22) et les sections de mesure (31, ..., 39) présentent des propriétés physiques différentes pour permettre une différenciation par une unité de détection (60),
dans lequel des zones d'identification (71, ..., 79, 81, ..., 89, 91, ..., 94) sont formées par les sections de mesure (31, ..., 39) associées chacune à une ou deux sections de marquage (22, 24, 26) contiguës,
dans lequel pour augmenter une capacité de codage, en comparaison à des dispositifs de codage avec des sections de marquage de largeur constante, les sections de marquage (22) présentent une largeur variable et
dans lequel chaque section d'identification (71, ..., 79, 81, ..., 89, 91, ..., 94) apparaît exactement une fois.

2. Dispositif de codage selon la revendication 1,
qui est conformé en rail de codage (20).

3. Dispositif de codage selon la revendication 1,
qui est formé d'une pluralité de drapeaux métalliques séparés servant de sections de marquage ou de mesure.

4. Dispositif de codage selon l'une quelconque des revendications 1 à 3, qui est placé sur une trajectoire incurvée.

5. Capteur de déplacement inductif pour déterminer une position d'un premier objet (40) par rapport à un deuxième objet (50), en particulier pour appliquer le procédé de la revendication 17,
avec un dispositif de codage (20) selon l'une quelconque des revendications 1 à 4 devant être apposé sur le premier objet (40), et
avec une unité de détection (60) devant être apposée sur le deuxième objet (50), comprenant une pluralité de capteurs inductifs (64, 66) pour balayer le dispositif de codage (20),
dans lequel les capteurs inductifs (64, 66) sont placés dans l'unité de détection (60) à des distances égales les uns des autres et l'unité de détection (60) est au moins assez longue dans la direction d'extension (90) du dispositif de codage (20), et
dans lequel un nombre des capteurs inductifs (64, 66) est au moins assez grand pour que, dans chaque situation de mesure, la largeur (30) d'au moins deux sections de mesure (31, ..., 39) puisse être déterminée.

6. Capteur de déplacement selon la revendication 5,
**caractérisé**
**en ce que** les sections de marquage (22) et les sections de mesure (31, ..., 39) présentent des conductivités électriques différentes.

7. Capteur de déplacement selon la revendication 6,
**caractérisé**
**en ce que** les sections de mesure (22) sont conductrices électriquement et
**en ce que** les sections de mesure (31, ..., 39) sont isolantes électriquement.

8. Capteur de déplacement selon l'une quelconque des revendications 5 à 7,
**caractérisé**
**en ce que** les sections de marquage (22) et les sections de mesure (31, ..., 39) présentent des perméabilités magnétiques différentes.

9. Capteur de déplacement selon l'une quelconque des revendications 5 à 8,
**caractérisé**
**en ce que** les sections de marquage (22) sont des drapeaux métalliques d'une tôle métallique et
**en ce que** les sections de mesure (31, ..., 39) sont des évidements dans la tôle métallique.

10. Capteur de déplacement selon l'une quelconque des revendications 5 à 9,
**caractérisé**
**en ce que** les capteurs inductifs (64, 66) sont disposés en plusieurs rangées, en particulier en deux rangées, de manière décalée les uns par rapport aux autres.

11. Capteur de déplacement selon l'une quelconque des revendications 5 à 10,
**caractérisé**
**en ce que** les sections de mesure (31, ..., 39) sont réparties de telle manière sur le dispositif de codage (20) que, pour une section de marquage (22) sur deux, la somme des largeurs des deux sections de mesure voisines (31, ..., 39) ne diffère pas de plus de 10 % par rapport à une valeur moyenne.

12. Capteur de déplacement selon la revendication 11,
**caractérisé**
**en ce que**, pour une section de marquage (22) sur deux, la somme des largeurs des deux sections de mesure voisines (31, ..., 39) est constante.

13. Capteur de déplacement selon l'une quelconque des revendications 5 à 12,
**caractérisé**
**en ce qu'**une pluralité de dispositifs de codage (20) sont disposés parallèlement les uns aux autres.

14. Capteur de déplacement selon l'une quelconque des revendications 5 à 13,
**caractérisé**
**en ce que** plusieurs dispositifs de codage (20) sont placés contigus les uns aux autres dans la direction d'extension (90).

15. Capteur de déplacement selon l'une quelconque des revendications 5 à 14,
**caractérisé**
**en ce que**, pour agrandir une largeur maximale détectable (30) d'une section de mesure (31, ..., 39), une pluralité d'unités de détection (60) sont juxtaposées dans la direction d'extension (90).

16. Capteur de déplacement selon l'une quelconque des revendications 5 à 15,
**caractérisé**
**en ce que** chaque largeur des sections de mesure apparaît exactement une fois sur le dispositif de codage.

17. Procédé de détermination d'une position d'un premier objet par rapport à un deuxième objet,
dans lequel un dispositif de codage (20) placé sur le premier objet (40) est balayé avec une unité de détection (60) placée sur le deuxième objet (50) et comprenant une pluralité de capteurs inductifs,
**caractérisé**
**en ce que** le dispositif de codage (20) comprend une pluralité de sections de marquage (22) qui sont séparées à chaque fois par des sections de mesure (31, ..., 39), les sections de mesure (31, ..., 39) présentant des largeurs variables (30),
**en ce qu'**une information sur une position absolue est contenue dans les intervalles entre les différentes sections de marquage,
**en ce que** les sections de marquage (22) et les sections de mesure (31, ..., 39) présentent des propriétés physiques différentes pour permettre une différenciation par l'unité de détection (60),
**en ce que** des zones d'identification (71, ..., 79, 81, ..., 89, 91, ..., 94) sont formées par les sections de mesure (31, ..., 39) associées chacune à une ou deux sections de marquage (22, 24, 26) contiguës,
**en ce que** pour augmenter une capacité de codage, en comparaison à des dispositifs de codage avec des sections de marquage de largeur constante, les sections de marquage (22) présentent une largeur variable,
**en ce que** l'unité de détection (60) est au moins assez longue dans la direction d'extension du dispositif de codage (20) et un nombre des capteurs inductifs (64, 66) est au moins assez grand pour que, dans chaque situation de mesure, la position locale d'au moins une zone d'identification (71, ... , 79, 81, ... , 89, 91, ... , 94) puisse être déterminée,
**en ce que** chaque zone d'identification (71, ..., 79, 81, ..., 89, 91, ..., 94) apparaît exactement une fois sur le dispositif de codage (20), et
**en ce qu'**à l'aide de la section d'identification (71, ..., 79, 81, ..., 89, 91, ..., 94), la position absolue de l'unité de détection (60) par rapport au dispositif de codage (20) peut être déterminée de manière claire.
